# EUROPEAN PATENT SPECIFICATION

(11) **EP 2 195 597 B1**
(45) Date of publication and mention of the grant of the patent: **03.07.2019**
(21) Application number: 08793517.7
(22) Date of filing: 27.08.2008
(51) Int. Cl.: F28F 9/00, F28F 9/02, F25B 39/02, F28D 1/053

(54) **EVAPORATOR**
VERDAMPFER
ÉVAPORATEUR

(30) Priority: 03.09.2007 KR 20070089014
(43) Date of publication of application: 16.06.2010
(73) Proprietor: Hanon Systems, Daejeon 34325 (KR)
(72) Inventor: LIM, Hong-Young, Daejeon 306-230 (KR); OH, Kwang Hun, Daejeon 306-230 (KR); JEON, Young-Ha, Daejeon 306-230 (KR)
(74) Representative: Herrmann, Uwe
(86) International application number: PCT/KR2008/005013
(87) International publication number: WO 2009/031782

(56) References cited:
- EP-A1- 1 640 682
- WO-A1-03/033984
- DE-A1-102005 062 423
- DE-T5-112005 000 560
- JP-A- 8 136 176
- JP-A- 2002 147 990
- KR-A- 980 010 322
- KR-A- 20060 021 444
- KR-A- 20060 075 848
- US-A1- 2007 144 714

## Description

### [Technical Field]

The present invention relates to an evaporator, and more particularly, to an evaporator which can restrict a surface area of a communication hole with respect to a cross sectional area of a compartment and a surface area of a tube with respect to a surface area of a fin, thereby providing a dimensional extent for maximizing the heat exchange efficiency.

### [Background Art]

In the recent automotive industry, according as the global interest in environment and energy is increased, there has been performed research and development in the improvement of fuel efficiency. And, in order to satisfy various users' requirements, there has been also proceeded research and development in light, small and multi-functional automobiles. Also, the evaporator has been improved to realize the smaller size and to increase the heat exchange efficiency together.

The evaporator is a component of an air conditioner in which air introduced by an air blower is cooled due to heat exchange while liquid heat exchange medium is changed into a gaseous state and then the cooled air is supplied inside a vehicle.

A conventional evaporator includes first and second header tanks which forms at least one or more compartments and disposed to be parallel with each other; inlet and outlet pipes which are formed at one side of the first header tank; a baffle which is provided in the first or second header tank to control a flow of refrigerant; a core portion having a plurality of tubes of which both ends are fixedly disposed at the first and second header tanks to form a first row communicated with the inlet pipe and a second row communicated with the outlet pipe, and a plurality of fins which are interposed between the tubes; and a communication portion which has a communicating hole for communicating a part of the first and second rows.

Since the evaporator is comprised of the first and second rows, even though a flow passage of the header tank and the tube is formed properly, the flow of refrigerant is considerably changed according to a size of the communicating hole of the communication portion for communicating the first and second rows.

Further, in the evaporator, the refrigerant is flowed through the header tank and the tube, and while external air is flowed along the fin interposed between the tubes, the heat exchange is occurred between the refrigerant and the external air. Thus, if a height of the tube is high, the internal refrigerant is smoothly flowed, but since a height of the external fin is reduced and thus the flow of external air is restricted, the heat exchange performance is deteriorated. However, if the height of the tube is low, the external air can be smoothly flowed, but the flow of internal refrigerant is restricted and thus the heat exchange performance is deteriorated.

A surface temperature of the evaporator is changed according to the size and surface area of the communicating hole, and the height of the fin and tube, and temperature deviation on a surface of the core portion may be occurred.

However, in the conventional evaporator, there was provided only limitation of its shape or general dimensions, and there was never provided a detailed dimensional extent such as the surface area of the communicating hole and the number of the communicating holes considering the flow of refrigerant, and the height and the surface area of the fin and tube and a density of the fins considering a pressure drop amount of the refrigerant and the like.

EP 1 640 682 A1 discloses an evaporator of the related art, using compact micro-channel tubes having a high heat transfer efficiency.

### [Disclosure]

### [Technical Problem]

An object of the present invention is to provide an evaporator with a core portion having a width of 20 ∼ 35mm, which has a dimensional extent such as the surface area of the communicating hole, the number of the communicating holes, the height of the tube, a density of the fins and like considering the flow of refrigerant so as to minimize a difference in the surface temperature and maximize a heat radiation amount in the evaporator, thereby increasing the heat exchange efficiency.

### [Technical Solution]

To achieve the object of the present invention, the present invention provides an evaporator 80 comprising first and second header tanks 10 and 20 which form at least one or more compartments 11 and disposed parallely to be apart from each other in a distance; inlet and outlet pipes 30 and 40 which are respectively formed at one side of the first header tank 10; a baffle 50 which is provided in the first or second header tank 10 or 20 so as to control a flow of refrigerant and; a core portion 60 having a plurality of tubes 61 of which both ends are fixedly disposed at the first and second header tanks 10 and 20 to form a first row communicating with the inlet pipe 30 and a second row communicating with the outlet pipe 40, and a plurality of fins 62 which are interposed between the tubes 61, wherein the core portion 60 has a width W_{core} of 20∼35mm, and a communication portion 70 having a communicating hole 71 for communicating parts of the first and second rows is formed in the first header tank 10 or the second header tank 20, and a surface area A71 of the communicating hole 71 is formed to be 70 ∼ 130% of a cross sectional area All' of the compartment 11 of the first header tank 10 or the second header tank 20 communicating with the first row.

The communication portion 70 has one communicating hole 71. Preferably, the fin 62 has a height H_{fin} of 4 ∼ 7mm, and the tube 61 has a height H_{tube} of 2 ∼ 3mm.

A surface area A61 of the tube 61 in the core portion 60 is formed to be 30 ∼ 50% of a surface area A62 of the fin 62.

A surface area A71 of the communicating hole 71 is formed to be 70 ∼ 130% of a cross sectional area All' of the compartment 11 of the first header tank 10 or the second header tank 20 communicating with the first row. Preferably, a density D_{fin} of the fins 62 is 60 ∼ 78 FPDM (Fin Per Deci-Meter).

Preferably, the evaporator 80 comprises a first region A1 in which the refrigerant introduced to the first header tank 10 via the inlet pipe 30 is flowed to the second header tank 20 through the tube 61 of the first row, a second region A2 which is adjacent to the first region A1 and in which the refrigerant flowed to the second header tank 20 through the first region A1 is flowed to the first header tank 10 through the tube 61 of the first row, a third region A3 in which the refrigerant flowed through the communication portion 70 of the first header tank 10 is flowed to the second header tank 20 through the tube 61 of the second row, and a fourth region A4 in which the refrigerant flowed to the second header tank 20 through the third region A3 is flowed to the first header tank 10 through the tube 61 of the second row, and the refrigerant is discharged through the outlet pipe 40.

Preferably, the evaporator 80 comprises a first region A1 in which the refrigerant introduced to the first header tank 10 via the inlet pipe 30 is flowed to the second header tank 20 through the tube 61 of the first row, a second region A2 which is adjacent to the first region A1 and in which the refrigerant flowed to the second header tank 20 through the first region A1 is flowed to the first header tank 10 through the tube 61 of the first row, a third region A3 which is adjacent to the second region A2 and in which the refrigerant flowed to the first header tank 10 through the second region A2 is flowed to the second header tank 20 through the tube 61 of the first row, and a fourth region A4 in which the refrigerant flowed through communication portion 70 of the second header tank 20 is flowed to the first header tank 10 through the tube 61 of the second row, a fifth region A5 which is adjacent to the fourth region A4 and in which the refrigerant flowed to the first header tank 10 through the fourth region A4 is flowed to the second header tank 20 through the tube 61 of the second row, and a sixth region A6 which is adjacent to the fifth region A5 and in which the refrigerant flowed to the second header tank 20 through the fifth region A5 is flowed to the first header tank 10 through the tube 61 of the second row, and the refrigerant is discharged through the outlet pipe 40.

### [Advantageous Effects]

Therefore, by optimizing a relation between the surface area of the communication portion and the surface area of the compartment of the first header tank and dimensions for each surface area and the heights of the tube and fin, the present invention provides a dimensional extent for maximizing the heat radiation amount, reducing the maximum temperature deviation of the core portion and allowing the refrigerant and air to be smoothly flowed, thereby maximizing the heat exchange efficiency.

### [Description of Drawings]

The above and other objects, features and advantages of the present invention will become apparent from the following description of preferred embodiments given in conjunction with the accompanying drawings, in which:
Fig. 1 is a perspective view of an evaporator according to the present invention.
Fig. 2 is a schematic view showing a flow of refrigerant in the evaporator of Fig. 1.
Fig. 3 is a cross-sectional view of the evaporator of Fig. 1.
Fig. 4 is a cross-sectional view of a header tank of the evaporator of Fig. 1.
Fig. 5 is a front view of the evaporator of Fig. 1, which shows a surface area of a tube.
Fig. 6 is a front view of the evaporator of Fig. 1, which shows a surface area of a fin.
Fig. 7 is a view showing a heat radiation amount according to a surface area of a communication hole/a cross-sectional area of a compartment.
Fig. 8 is a view showing a maximum temperature deviation on a surface of a core portion according to the surface area of the communication hole/the cross-sectional area of the compartment.
Fig. 9 is a view showing a heat radiation and a maximum temperature deviation on the surface of the core portion according to the number of communicating holes.
Fig. 10 is a view showing a pressure drop amount of refrigerant, a pressure drop amount of air and a heat radiation amount according to a height of the fin.
Fig. 11 is a view showing a pressure drop amount of refrigerant, a pressure drop amount of air and a heat radiation amount according to a height of the tube.
Fig. 12 is a view showing a heat radiation amount according to a surface area of the tube/a surface area of the fin.
Fig. 13 is a view showing a pressure drop amount of air according to the surface area of the tube/the surface area of the fin.
Fig. 14 is a view showing a heat radiation amount according to a surface area of the communicating hole/a surface area of the communication portion.
Fig. 15 is a view showing a maximum temperature deviation on the surface of the core portion according to the surface area of the communicating hole/the surface area of the communication portion.
Fig. 16 is a view explaining FPDM.
Fig. 17 is a view of another evaporator according to the present invention.
Fig. 18 is a cross-sectional view of the evaporator of Fig. 17.

**[Detailed Description of Main Elements]**

| | | | |
|---|---|---|---|
| 10: | first header tank | 11: | compartment |
| 20: | second header tank | 30: | inlet pipe |
| 40: | outlet pipe | | |
| 50: | baffle | 60: | core portion |
| 61: | tube | 62: | fin |
| 70: | communication portion | 71: | communicating hole |
| 80: | evaporator of the present invention | | |
| A1-A4: | each region of evaporator | | |
| A70: | surface area of communication portion | | |
| A71: | surface area of communicating hole | | |
| A60: | surface area of core portion | | |
| A61: | surface area of tube | | |
| A62: | surface area of fin | | |
| All': | cross sectional area of compartment communicated with first row of first header tank | | |
| W_{core}; | width of core portion | H_{fin}: | height of fin |
| H_{tube}: | height of tube | D_{fin}: | density of fins |

### [Best Mode]

Hereinafter, the embodiments of the present invention will be described in detail with reference to accompanying drawings.

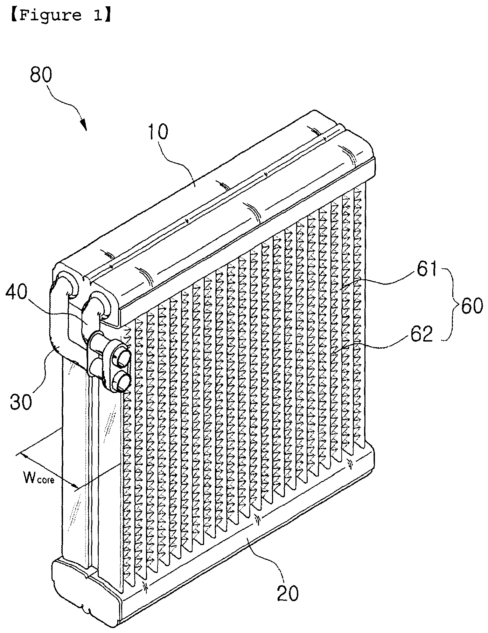

Fig. 1 is a perspective view of an evaporator 80 according to the present invention. The evaporator 80 of the present invention includes first and second header tanks 10 and 20 which form at least one or more compartments 11 and disposed parallely to be apart from each other in a distance; a core portion 60 having a plurality of tubes 61 of which both ends are fixedly disposed at the first and second header tanks 10 and 20 to form a first row and a second row, and a plurality of fins 62 which are interposed between the tubes 61; and inlet and outlet pipes 30 and 40 which are respectively formed at one side of the first header tank 10 or the second head tank 20.

Further, a baffle 50 for controlling a flow of refrigerant and a communication portion 70 having a communicating hole 71 for communicating the first and second rows are provided in the first or second header tank 10 or 20. The core portion 60 has a width W_{core} of 20∼35mm.

The width W_{core} of the core portion 60 is a side surface of the tube 61 and the fin 62 and means a width of an effective surface area in which the heat exchange medium is flowed, as shown in Fig. 1.

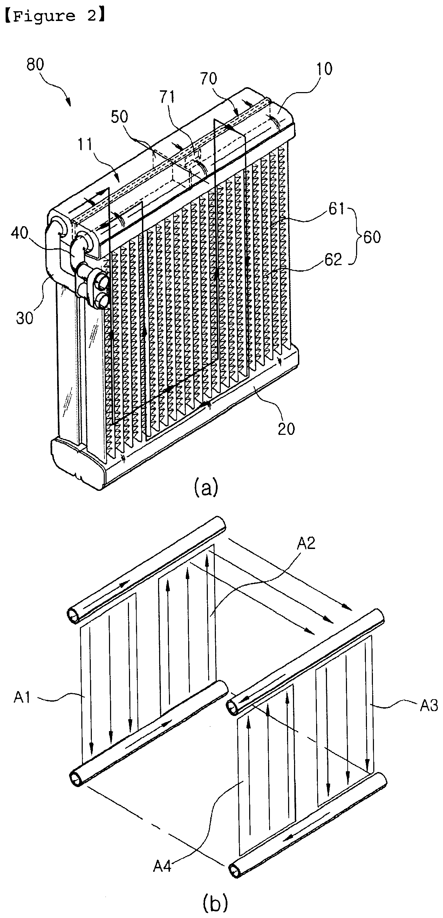

As shown in Fig. 2, the present invention may be formed to have a 4-pass flow, and is characterized by a dimensional extent for improving the heat exchange efficiency, such as a surface area A71 of the communicating hole 71, a surface area A62 of the fin 62, a surface area A61 of the tube 61, a density D_{fin} of the fins 62 and the like, when the width W_{core} of the core portion 60 is 20∼35mm. First of all, the refrigerant flow in the evaporator 80 and the technical terms used in the present invention will be described.

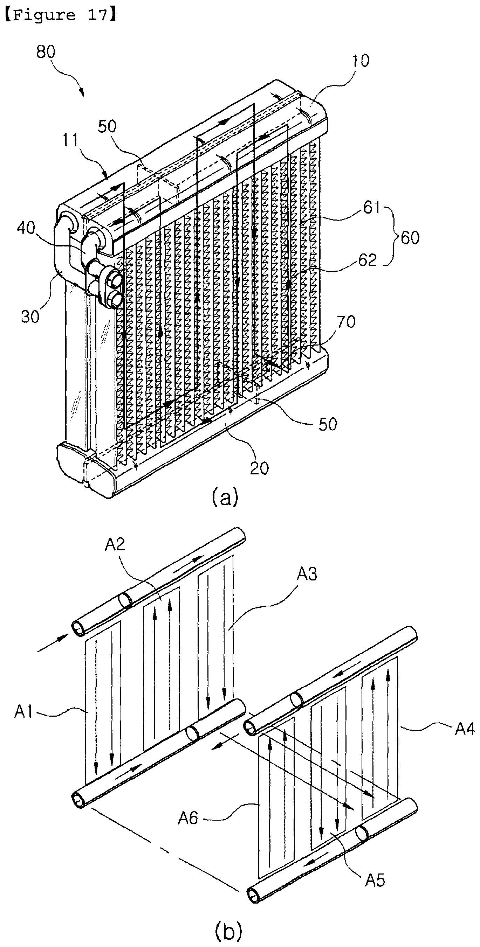

Furthermore, as shown in Fig. 17, the evaporator 80 of the present invention may be formed to have a 6-pass flow which will be described later.

Fig. 2 is a schematic view showing a flow of refrigerant in the evaporator 80 of Fig. 1. The evaporator 80 of the present invention is formed with a first region A1 and a second region A2 which are adjacent to each other and communicated with the first row and a third region A3 and a fourth region A4 which are adjacent to each other and communicated with the second row.

In more detail, the evaporator 80 of the present invention includes the first region A1 in which the refrigerant introduced to the first header tank 10 via the inlet pipe 30 is flowed to the second header tank 20 through the tube 61 of the first row, the second region A2 which is adjacent to the first region A1 and in which the refrigerant flowed to the second header tank 20 through the first region A1 is flowed to the first header tank 10 through the tube 61 of the first row, the third region A3 in which the refrigerant flowed through the communication portion 70 of the first header tank 10 is flowed to the second header tank 20 through the tube 61 of the second row, and the fourth region A4 in which the refrigerant flowed to the second header tank 20 through the third region A3 is flowed to the first header tank 10 through the tube 61 of the second row. The refrigerant is discharged to the outlet pipe 40 through the fourth region A4 adjacent to the third region A3.

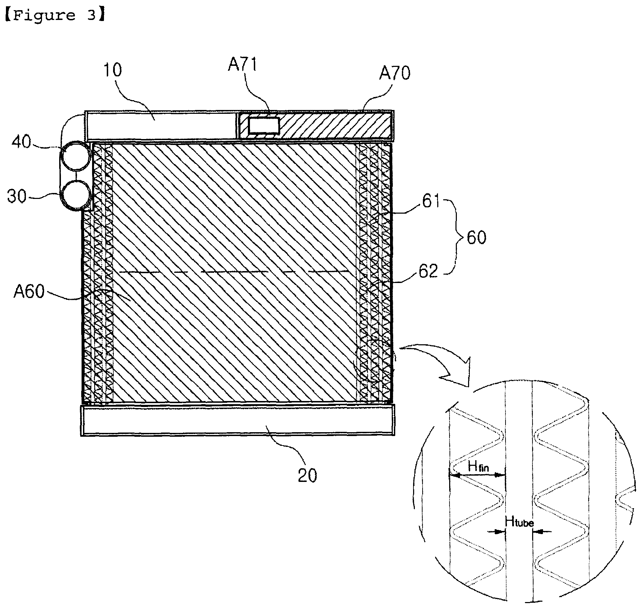

Fig. 3 is a cross-sectional view of the evaporator 80 of Fig. 1. The communication portion 70 is served as a portion for connecting the second and third regions A2 and A3. The surface area A70 of the communication portion 70 is an entire surface area of a portion in which the communicating hole 71 can be formed, as shown in Fig. 3. The surface area A71 of the communicating hole 71 is a surface area of a hole formed at the communication portion 70.

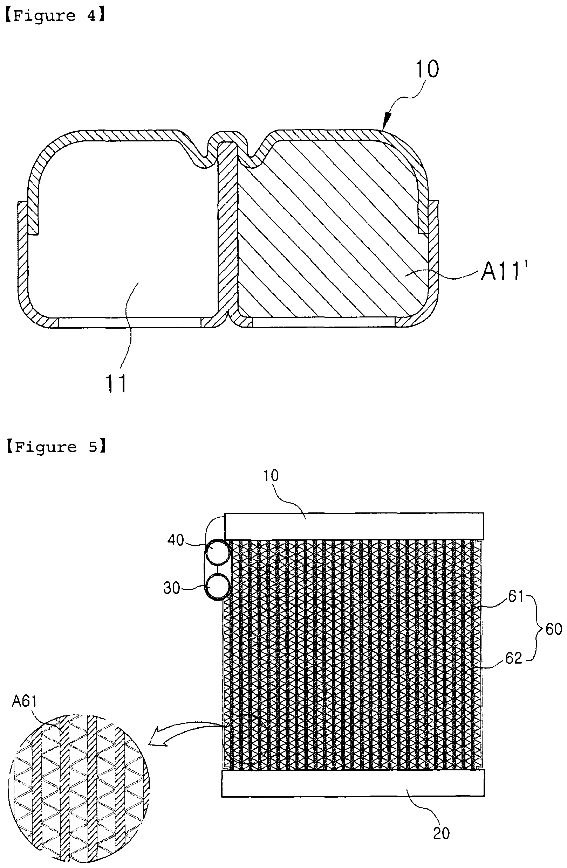

And, as shown in Fig. 3, the surface area A60 of the core portion 60 is an entire portion in which the tube 61 and the fin 62 are formed. Fig. 4 is a cross-sectional view of a header tank of the evaporator 80 of Fig. 1, wherein a portion designated by oblique lines is a surface area All' of a compartment 11 communicated with the first row of the first header tank 10.

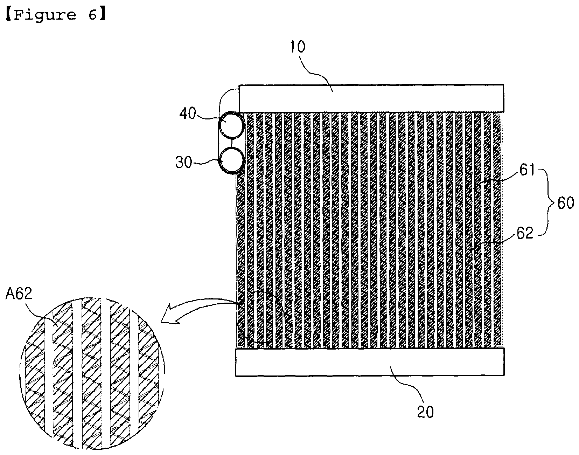

Figs. 5 and 6 are front views of the evaporator 80 of Fig. 1, which show surface areas A61 and A62 of the tube 61 and the fin 62, respectively.

As shown in Fig. 5, the surface area A61 of the tube 61 is a portion in which the tube 61 is formed when 5 viewing the evaporator 80, and as shown in Fig. 6, the surface area A62 of the fin 62 is a portion in which the fin 62 is formed when squarely viewing the evaporator 80.

The evaporator 80 of the present invention is constructed as shown in Figs. 1 and 4. The width W_{core} of the core portion 60 is 20∼35mm, and the surface area A71 of the communicating hole 71 is 70% ∼ 130% of the cross-sectional area All' of the compartment 11 of the first header tank 10 communicated with the first row.

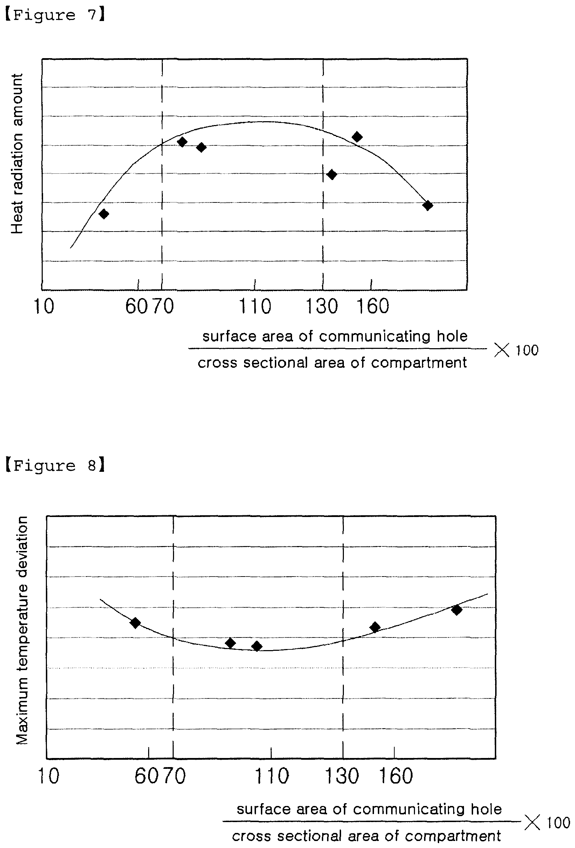

Fig. 7 is a view showing a heat radiation amount according to the surface area A71 of the communication hole/the cross-sectional area All' of the compartment, and Fig. 8 is a view showing a maximum temperature deviation on the surface of the core portion 60 according to the surface area A71 of the communication hole/the cross-sectional area All' of the compartment, which show results in a status that, in the evaporator of 270-280 mm wide x 265mm long x 35mm thick, the surface area A71 of the communicating hole 71 is varied, while the cross-sectional area All' of the compartment 11 communicated with the first row of the first header tank 10 is fixedly formed.

As shown in Figs. 7 and 8, when the surface area A71 of the communicating hole 71 with respect to the cross-sectional area All' of the compartment 11 is 70 ∼ 130%, the heat radiation amount of the evaporator 80 becomes maximum, and the maximum temperature deviation on the surface of evaporator 80 becomes minimum.

In case that the heat radiation amount is low, since the heat exchange efficiency of the evaporator 80 is deteriorated, the stable air-conditioning performance cannot be expected. And as the maximum temperature deviation on the surface of evaporator 80 is increased, the temperature of the air passing through each part becomes different, and it is difficult to provide pleasant temperature to persons in a vehicle. Therefore, in order to increase the heat radiation amount and decrease the maximum temperature deviation, the evaporator 80 of the present invention is constructed so that the surface area A71 of the communicating hole 71 is 70 ∼ 130% of the cross sectional area All' of the compartment 11 of the first header tank 10 communicated with the first row.

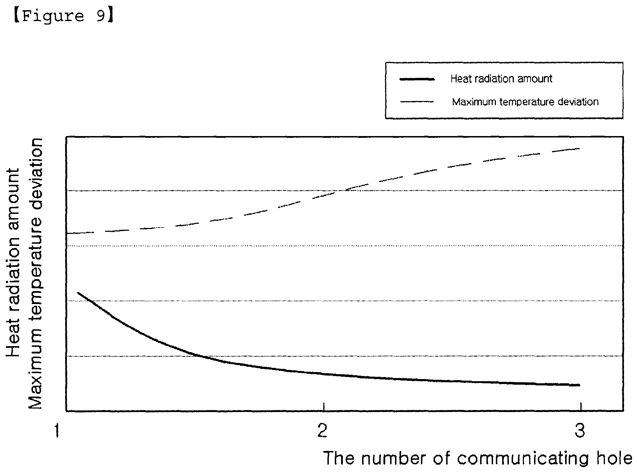

Fig. 9 is a view showing the heat radiation and the maximum temperature deviation on the surface of the core portion 60 according to the number of communicating holes 71, which show a result in case that the number of the communicating holes 71 is changed from 1 to 3 while the entire surface area A71 of the communicating hole 71 is fixedly formed.

As shown in Fig. 9, in case that the number of the communicating holes 71 is changed without the variation of the surface area A71 of the communicating hole 71, the heat radiation is lowered and the maximum temperature deviation is increased according as the number of the communicating holes 71 is increased. Therefore, in the evaporator 80 of the present invention, the communication portion 70 has to have one communicating hole 71.

If the number of the communicating holes 71 is increased, the surface area A71 of each communicating hole 71 is reduced and a distance between the communicating holes 71 is formed, and thus it exerts a bad effect on refrigerant distribution according to the variation of the number of tubes 61 and the like exerting an effect on the communicating hole 71.

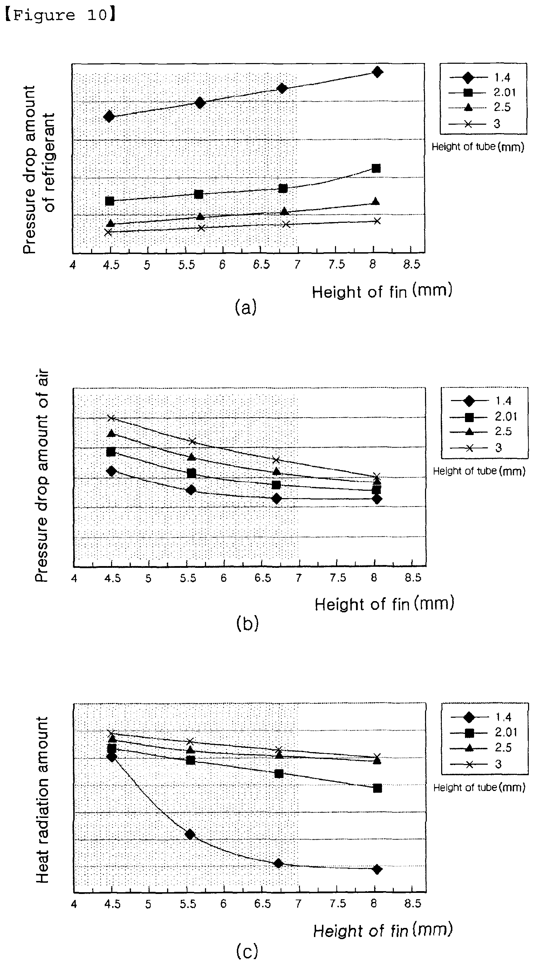

Fig. 10 is a view showing a pressure drop amount of refrigerant, a pressure drop amount of air and the heat radiation amount according to a height H_{fin} of the fin 62, wherein (a) shows the pressure drop amount of refrigerant, (b) is the pressure drop amount of air and (c) is the heat radiation amount when the height H_{fin} of the fin 62 is changed according to the height H_{tube} of each tube 61.

As shown in Fig. 10, when the height H_{fin} of the fin 62 is 4 ∼ 7mm, it shows that the pressure drop amount of refrigerant and the pressure drop amount of air are proper and the heat radiation amount is high.

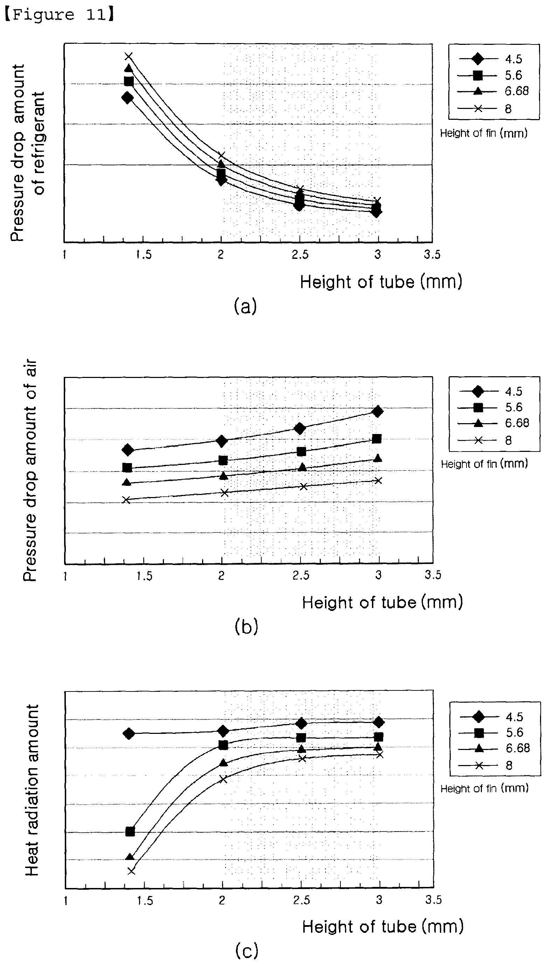

And Fig. 11 is a view showing the pressure drop amount of refrigerant, the pressure drop amount of air and the heat radiation amount according to the height H_{tube} of the tube 61, wherein (a) shows the pressure drop amount of refrigerant, (b) is the pressure drop amount of air and (c) is the heat radiation amount when the height H_{tube} of the tube 61 is changed according to the height H_{fin} of each fin 62.

As shown in Fig. 11, when the height H_{tube} of the tube 61 is 2 - 3mm, it shows that the pressure drop amount of refrigerant and the pressure drop amount of air are proper and the heat radiation amount is high.

As shown in Figs. 10 and 11, it is preferable in the evaporator 80 of the present invention that the height H_{fin} of the fin 62 is 4 ∼ 7mm and the height H_{tube} of the tube 61 is 2 ∼ 3mm.

Meanwhile, another evaporator 80 of the present invention formed as shown in Figs. 1 to 4 is characterized in that the width W_{core} of the core portion 60 is 20 ∼ 35mm, and the surface area A61 of the tube 61 in the core portion 60 is 30 ∼ 50% of the surface area A62 of the fin 62.

Since the tube 61 and the fin 62 respectively form flow passages of the refrigerant and air, the surface area A61 of the tube 61 and the surface area A62 of the fin 62 have a great influence on the flow of refrigerant and air. In more detail, if the surface area A61 of the tube 61 is increased, the refrigerant in the tube 61 is smoothly flowed, but since the pressure drop amount of air is excessively increased, the heat radiation amount is reduced, and if the surface area A62 of the fin 62 is increased, the flowing air is smoothly flowed, but since the space in the tube 61 is reduced and thus the pressure drop amount of refrigerant is excessively increased, the heat radiation amount is reduced.

In general, since the entire size of the evaporator 80 is previously determined, the evaporator 80 of the present invention properly adjusts the surface areas of the tube 61 and the fin 62 and thus provides a dimension of the surface area A61 of the tube 61 with respect to the surface area A62 of the fin 62 so as to maximize the heat radiation amount.

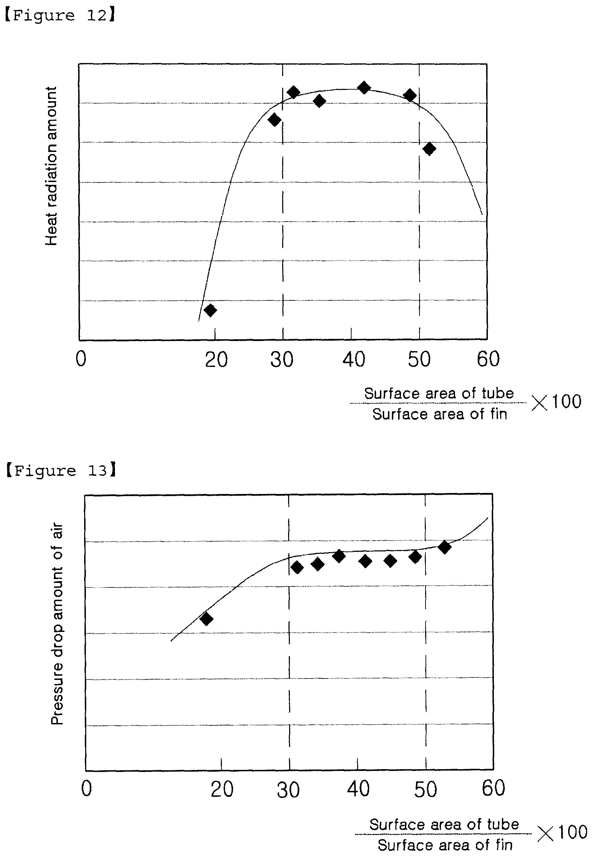

Fig. 12 is a view showing the heat radiation amount according to the surface area A61 of the tube 61/the surface area A62 of the fin 62 and Fig. 13 is a view showing the pressure drop amount of air according to the surface area A61 of the tube 61/the surface area A62 of the fin 62. In Figs. 12 and 13, it can be understood that the heat radiation amount is maximum and the pressure drop amount of air is properly maintained, when the surface area A61 of the tube 61 is 30 ∼ 50% of the surface area A62 of the fin 62.

Further, it is preferable in the evaporator 80 that the surface area A71 of the communicating hole 71 is formed to be 70 ∼ 130% of the cross sectional area All' of the compartment 11 of the first header tank 10 communicated with the first row and the density D_{fin} of the fins 62 is 60 ∼ 78 FPDM (Fin Per Deci-Meter) so as to increase the heat radiation amount according to an amount of the applied refrigerant.

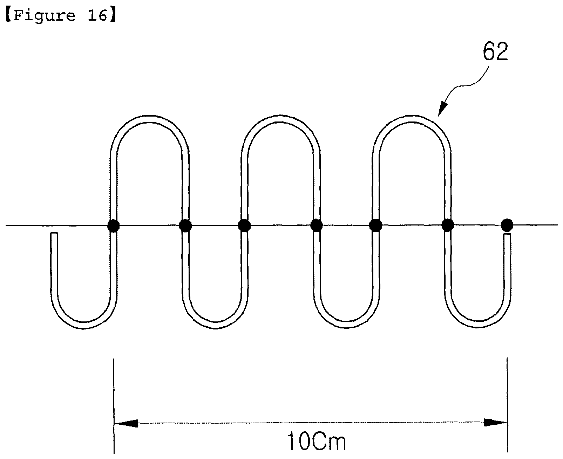

Herein, the FPDM means the number of fins per lOCm. Fig. 16 is a view for explaining the FPDM, wherein the density D_{fin} of the fins 62 is 7FPDM.

The proper flowing of air is influenced by the number of the fins 62 formed on the surface area A62 of the fin 62 as well as the entire surface area that the fins 62 are formed. Therefore, in the evaporator 80 of the present invention, the density D_{fin} of the fins 62 is 60 ∼ 78FPDM, that is, 60- 78 fins are provided per 10 Cm.

In the evaporator 80, it is preferable that the surface area A71 of the communicating hole 71 is formed to be 5 ∼ 30% of the surface area A70 of the communication portion 70

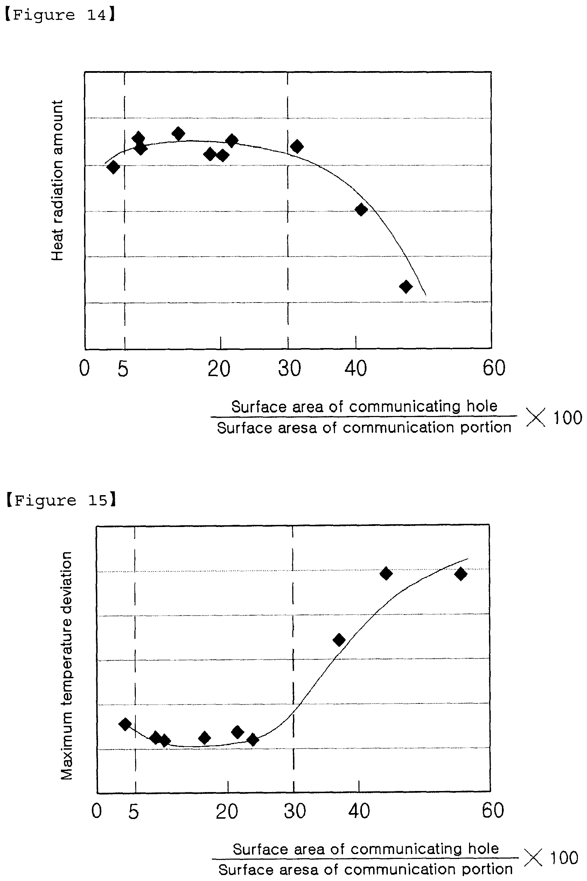

Fig. 14 is a view showing the heat radiation amount according to the surface area A71 of the communicating hole 71/the surface area A70 of the communication portion 70, and Fig. 15 is a view showing the maximum temperature deviation on the surface of the core portion 60 according to the surface area A71 of the communicating hole 71/the surface area A70 of the communication portion 70, which respectively show the heat radiation amount and the maximum temperature deviation on the surface of the core portion 60 when the surface area A71 of the communicating hole 71 is changed while the entire surface area of the communication portion 70 is set to 0.0018081m² and the rest conditions are the same.

Referring to Fig. 14, in case that the surface area A71 of the communicating hole 71/the surface area A70 of the communication portion 70 is over 40%, the heat radiation amount is sharply reduced, and in case that the surface area A71 of the communicating hole 71/the surface area A70 of the communication portion 70 is over 30%, the maximum temperature deviation on the surface of the core portion 60 is rapidly increased. Therefore, in order to prevent the reduction of the heat radiation amount and reduce the maximum temperature deviation, the surface area A71 of the communicating hole 71 with respect to the surface area A70 of the communication portion 70 is formed to be 30% in the evaporator 80 of the present invention.

As described above, the evaporator 80 of the present invention provides a dimensional extent for maximizing the heat radiation amount, reducing the maximum temperature deviation of the core portion 60 and allowing the refrigerant and air to be smoothly flowed, thereby maximizing the heat exchange efficiency.

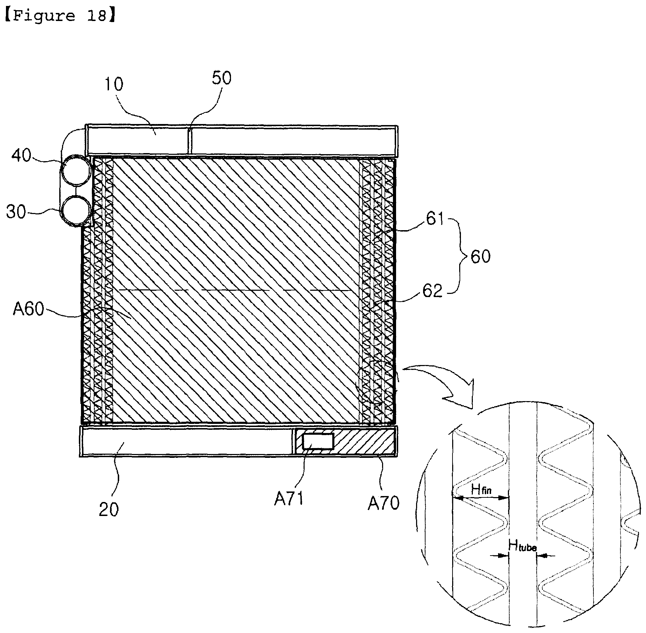

In addition, as shown in Figs. 17 and 18, the evaporator 80 of the present invention may be formed to have a 6-pass flow to be described below. The evaporator 80 of the present invention shown in Fig. 17 includes a first region A1 in which the refrigerant introduced to the first header tank 10 via the inlet pipe 30 is flowed to the second header tank 20 through the tube 61 of the first row, a second region A2 which is adjacent to the first region A1 and in which the refrigerant flowed to the second header tank 20 through the first region A1 is flowed to the first header tank 10 through the tube 61 of the first row, a third region A3 which is adjacent to the second region A2 and in which the refrigerant flowed to the first header tank 10 through the second region A2 is flowed to the second header tank 20 through the tube 61 of the first row, and a fourth region A4 in which the refrigerant flowed through communication portion 70 of the second header tank 20 is flowed to the first header tank 10 through the tube 61 of the second row, a fifth region A5 which is adjacent to the fourth region A4 and in which the refrigerant flowed to the first header tank 10 through the fourth region A4 is flowed to the second header tank 20 through the tube 61 of the second row, and a sixth region A6 which is adjacent to the fifth region A5 **and in which** the refrigerant flowed to the second header tank 20 through the fifth region A5 is flowed to the first header tank 10 through the tube 61 of the second row. Then, the refrigerant is discharged through the outlet pipe 40.

In this situation, as shown in Fig. 18, the communication portion 70 including the communicating hole 71 is formed at one side (the right side of the drawing) of the second header tank 20 so as to communicate the third and fourth regions A3 and A4, and the surface area A70 of the communication portion 70, which is designated by oblique lines in the second header tank 20 including the surface area A71 of the communicating hole 71, is the entire surface area in which the communicating hole 71 is formed.

Those skilled in the art will appreciate that the conceptions and specific embodiments disclosed in the foregoing description may be readily utilized as a basis for modifying or designing other embodiments for carrying out the same purposes of the present invention. Those skilled in the art will also appreciate that such equivalent embodiments do not depart from the scope of the invention as set forth in the appended claims.

### [Industrial Applicability]

According to the present invention, it is possible to provide a dimensional extent for maximizing the heat radiation amount, reducing the maximum temperature deviation of the core portion and allowing the refrigerant and air to be smoothly flowed, thereby maximizing the heat exchange efficiency.

## Claims

1. An evaporator (80) comprising first and second header tanks (10 and 20) which form at least one or more compartments (11) and disposed parallely to be apart from each other in a distance; inlet and outlet pipes (30 and 40) which are respectively formed at one side of the first header tank (10); a baffle (50) which is provided in the first or second header tank (10 or 20) so as to control a flow of refrigerant and; a core portion (60) having a plurality of tubes (61) of which both ends are fixedly disposed at the first and second header tanks (10 and 20) to form a first row communicating with the inlet pipe (30) and a second row communicating with the outlet pipe (40), and a plurality of fins (62) which are interposed between the tubes (61), wherein the core portion (60) has a width (W_{core}) of 20-35mm, and a communication portion (70) having a single communicating hole (71) for communicating parts of the first and second rows is formed in the first header tank (10) or the second header tank (20), **characterized in that** a surface area (A71) of the communicating hole (71) is formed to be 70 ∼ 130% of a cross sectional area (A11') of the compartment (11) of the first header tank (10) or the second header tank (20) communicating with the first row, and wherein the surface area (A71) of the communicating hole (71) is formed to be 5 ∼ 30% of a surface area (A70) of the communication portion (70).

2. The evaporator as set forth in claim 1, wherein the fin (62) has a height (H_{fin}) of 4 ∼ 7mm.

3. The evaporator as set forth in claim 2, wherein the tube (61) has a height (H_{tube}) of 2 ∼ 3mm.

4. The evaporator (80) as set forth in claim 1, wherein a surface area (A61) of the tube (61) in the core portion (60) is formed to be 30 ∼ 50% of a surface area (A62) of the fin (62).

5. The evaporator as set forth in claim 4, wherein a density (D_{fin}) of the fins (62) is 60 ∼ 78 FPDM (Fin Per Deci-Meter) .

6. The evaporator as set forth in claim 1, wherein the evaporator (80) comprises a first region (A1) in which the refrigerant introduced to the first header tank (10) via the inlet pipe (30) is flowed to the second header tank (20) through the tube (61) of the first row, a second region (A2) which is adjacent to the first region (A1) and in which the refrigerant flowed to the second header tank (20) through the first region (A1) is flowed to the first header tank (10) through the tube (61) of the first row, a third region (A3) in which the refrigerant flowed through the communication portion (70) of the first header tank (10) is flowed to the second header tank (20) through the tube (61) of the second row, and a fourth region (A4) which is adjacent to the third region (A3) and in which the refrigerant flowed to the second header tank (20) through the third region (A3) is flowed to the first header tank (10) through the tube (61) of the second row, and the refrigerant is discharged through the outlet pipe (40).

7. The evaporator as set forth in claim 1, wherein the evaporator (80) comprises a first region (A1) in which the refrigerant introduced to the first header tank (10) via the inlet pipe (30) is flowed to the second header tank (20) through the tube (61) of the first row, a second region (A2) which is adjacent to the first region (A1) and in which the refrigerant flowed to the second header tank (20) through the first region (A1) is flowed to the first header tank (10) through the tube (61) of the first row, a third region (A3) which is adjacent to the second region (A2) and in which the refrigerant flowed to the first header tank (10) through the second region (A2) is flowed to the second header tank (20) through the tube (61) of the first row, and a fourth region (A4) in which the refrigerant flowed through communication portion (70) of the second header tank (20) is flowed to the first header tank (10) through the tube (61) of the second row, a fifth region (A5) which is adjacent to the fourth region (A4) and in which the refrigerant flowed to the first header tank (10) through the fourth region (A4) is flowed to the second header tank (20) through the tube (61) of the second row, and a sixth region A6 which is adjacent to the fifth region (A5) and in which the refrigerant flowed to the second header tank (20) through the fifth region (A5) is flowed to the first header tank (10) through the tube (61) of the second row, and the refrigerant is discharged through the outlet pipe (40).

## Patentansprüche

1. Verdampfer (80), aufweisend erste und zweite Ausgleichsbehälter (10 und 20), die zumindest ein oder mehrere Abteilungen (11) bilden und parallel voneinander um einen Abstand beabstandet angeordnet sind; Einlass- und Auslassrohre (30 du 40), die jeweils auf einer Seite des ersten Ausgleichsbehälters (10) gebildet sind; eine Trennwand (50), die in dem ersten oder zweiten Ausgleichsbehälter (10 oder 20) bereitgestellt ist, um einen Fluss von Kältemittel zu steuern, und einen Kernabschnitt (60) mit einer Vielzahl von Rohren (61), deren beide Enden fest an den ersten und zweiten Ausgleichsbehältern (10 und 20) angeordnet sind, um eine erste Reihe, die mit dem Einlassrohr (30) kommuniziert, und eine zweite Reihe, die mit dem Auslassrohr (40) kommuniziert, und eine Vielzahl von Lamellen (62) zu bilden, die zwischen den Rohren (61) angeordnet sind, wobei der Kernabschnitt (60) eine Breite (W_{core}) von 20 bis 35 mm aufweist, und ein Kommunikationsabschnitt (70) mit einer einzelnen Kommunikationsöffnung (71) zur Kommunikation von Teilen der ersten und zweiten Reihen in dem ersten Ausgleichsbehälter (10) oder dem zweiten Ausgleichsbehälter (20) gebildet ist, **dadurch gekennzeichnet, dass** ein Flächeninhalt (A71) der Kommunikationsöffnung (71) derart gebildet ist, dass er 70 bis 130 % einer Querschnittsfläche (A11') der Abteilung (11) des ersten Ausgleichsbehälters (10) oder des zweiten Ausgleichsbehälters (20) ausmacht, die mit der erste Reihe kommunizieren, und wobei der Flächeninhalt (A71) der Kommunikationsöffnung (71) derart gebildet ist, dass er 5 bis 30 % eines Flächeninhalts (A70) des Kommunikationsabschnitts (70) ausmacht.

2. Verdampfer nach Anspruch 1, wobei die Lamelle (62) eine Höhe (H_{fin}) von 4 bis 7 mm aufweist.

3. Verdampfer nach Anspruch 2, wobei das Rohr (61) eine Höhe (H_{tube}) von 2 bis 3 mm aufweist.

4. Verdampfer (80) nach Anspruch 1, wobei ein Flächeninhalt (A61) des Rohrs (61) in dem Kernabschnitt (60) derart gebildet ist, dass er 30 bis 50 % eines Flächeninhalts (A62) der Lamelle (62) ausmacht.

5. Verdampfer nach Anspruch 4, wobei eine Dichte (D_{fin}) der Lamellen (62) 60 bis 78 FODM (Lamellen pro Dezimeter) beträgt.

6. Verdampfer nach Anspruch 1, wobei der Verdampfer (80) einen ersten Bereich (A1), in dem das über das Einlassrohr (30) in den ersten Ausgleichsbehälter (10) eingeleitete Kältemittel durch das Rohr (61) der ersten Reihe an den zweiten Ausgleichsbehälter (20) geleitet wird, einen zweiten Bereich (A2), der neben dem ersten Bereich (A1) ist und in den in den zweiten Ausgleichsbehälter (20) durch den ersten Bereich (A1) eingeleitetes Kältemittel durch das Rohr (61) der ersten Reihe an den ersten Ausgleichsbehälter (A1) geleitet wird, einen dritten Bereich (A3), in dem das durch den Kommunikationsabschnitt (70) des ersten Ausgleichsbehälters (10) eingeleitete Kältemittel durch das Rohr (61) der zweiten Reihe an den zweiten Ausgleichsbehälter (A2) geleitet wird, und einen vierten Bereich (A4) aufweist, der neben dem dritten Bereich (A3) ist und in dem an den zweiten Ausgleichsbehälter (20) durch den dritten Bereich (A3) eingeleitetes Kältemittel durch das Rohr (61) der zweiten Reihe an den ersten Ausgleichsbehälter (10) geleitet wird, und das Kältemittel durch das Auslassrohr (40) ausgeleitet wird.

7. Verdampfer nach Anspruch 1, wobei der Verdampfer (80) einen ersten Bereich (A1), in dem das Kältemittel, das über das Einlassrohr (30) in den erste Ausgleichsbehälter (10) eingeleitet wurde, durch das Rohr (61) der ersten Reihe an den zweiten Ausgleichsbehälter geleitet wird, einen zweiten Bereich (A2), der neben dem ersten Bereich (A1) ist und in dem Kältemittel, das durch den ersten Bereich (A1) in den zweiten Ausgleichsbehälter (20) geflossen ist, durch das Rohr (61) der erste Reihe an den zweiten Ausgleichsbehälter (20) geleitet wird, einen dritten Bereich (A3), der neben dem zweiten Bereich (A2) ist und in dem Kältemittel, das durch den zweiten Bereich (A2) in den ersten Ausgleichsbehälter geflossen ist, an den zweiten Ausgleichsbehälter (20) durch das Rohr (61) der ersten Reihe geleitet wird, und einen vierten Bereich (A4), in dem Kältemittel, das durch einen Kommunikationsabschnitt (70) des zweiten Ausgleichsbehälter (20) geflossen ist, durch das Rohr (61) der zweiten Reihe an den ersten Ausgleichsbehälter (10) geleitet wird, einen fünften Bereich (A5), der neben dem vierten Bereich (A4) ist und in dem das Kältemittel, dass durch den vierten Bereich (A4) in den ersten Ausgleichsbehälter (10) geflossen ist, durch das Rohr (61) der zweiten Reihe an den zweiten Ausgleichsbehälter geleitet wird, und einen sechsten Bereich A6 aufweist, der neben dem fünften Bereich (A5) ist und in dem das Kältemittel, das durch den fünften Bereich (A5) in den zweiten Ausgleichsbehälter (20) geflossen ist, durch das Rohr (61) der zweiten Reihe an den ersten Ausgleichsbehälter (10) geleitet wird, und das Kältemittel durch das Auslassrohr (40) ausgleitet wird.

## Revendications

1. Évaporateur (80) comprenant des premier et second réservoirs de charge (10 et 20) qui forment au moins un ou plusieurs compartiments (11) et disposés parallèlement pour être espacés l'un de l'autre d'une distance ; des tuyaux d'entrée et de sortie (30 et 40) qui sont respectivement formés au niveau d'un côté du premier réservoir de charge (10) ; un déflecteur (50) qui est disposé dans le premier ou second réservoir de charge (10 ou 20) de manière à réguler un flux de réfrigérant et ; une partie centrale (60) présentant une pluralité de tubes (60) dont les deux extrémités sont fixement disposées au niveau des premier et second réservoirs de charge (10 et 20) pour former une première rangée communiquant avec le tuyau d'entrée (30) et une seconde rangée communiquant avec le tuyau de sortie (40), et une pluralité d'ailettes (62) qui sont interposées entre les tubes (61), dans lequel la partie centrale (60) présente une largeur (W_{core}) de 20 à 35 mm, et une partie de communication (70) présentant un seul orifice de communication (71) pour la communication de parties des première et seconde rangées est formée dans le premier réservoir de charge (10) ou le second réservoir de charge (20), **caractérisé en ce qu'**une surface active (A71) de l'orifice de communication (71) est formée pour représenter de 70 à 130 % environ d'une section transversale (A11') du compartiment (11) du premier réservoir de charge (10) ou du second réservoir de charge (20) communiquant avec la première rangée, et dans lequel la surface active (A71) de l'orifice de communication (71) est formée pour représenter de 5 à 30 % environ d'une surface active (A70) de la partie de communication (70).

2. Évaporateur selon la revendication 1, dans lequel l'ailette (62) présente une hauteur (H_{fin}) de 4 à 7 mm environ.

3. Évaporateur selon la revendication 2, dans lequel le tube (61) présente une hauteur (H_{tube}) de 2 à 3 mm environ.

4. Évaporateur (80) selon la revendication 1, dans lequel une surface active (A61) du tube (61) dans la partie centrale (60) est formée pour représenter de 30 à 50 % environ d'une surface active (A62) de l'ailette (62).

5. Évaporateur selon la revendication 4, dans lequel une densité (D_{fin}) des ailettes (62) est de 60 à 70 FPDM (ailette par décimètre) environ.

6. Évaporateur selon la revendication 1, dans lequel l'évaporateur (80) comprend une première région (A1) dans laquelle le réfrigérant introduit dans le premier réservoir de charge (10) via le tuyau d'entrée (30) est amené à s'écouler vers le second réservoir de charge (20) à travers le tube (61) de la première rangée, une deuxième région (A2) qui est adjacente à la première région (A1) et dans laquelle le réfrigérant amené à s'écouler vers le second réservoir de charge (20) à travers la première région (A1) est amené à s'écouler vers le premier réservoir de charge (10) à travers le tube (61) de la première rangée, une troisième région (A3) dans laquelle le réfrigérant amené à s'écouler à travers la partie de communication (70) du premier réservoir de charge (10) est amené à s'écouler vers le second réservoir de charge (20) à travers le tube (61) de la seconde rangée, et une quatrième région (A4) qui est adjacente à la troisième région (A3) et dans laquelle le réfrigérant amené à s'écouler vers le second réservoir de charge (20) à travers la troisième région (A3) est amené à s'écouler vers le premier réservoir de charge (10) à travers le tube (61) de la seconde rangée, et le réfrigérant est évacué à travers le tuyau de sortie (40).

7. Évaporateur selon la revendication 1, dans lequel l'évaporateur (80) comprend une première région (A1) dans laquelle le réfrigérant introduit dans le premier réservoir de charge (10) via le tuyau d'entrée (30) est amené à s'écouler vers le second réservoir de charge (20) à travers le tube (61) de la première rangée, une deuxième région (A2) qui est adjacente à la première région (A1) et dans laquelle le réfrigérant amené à s'écouler vers le second réservoir de charge (20) à travers la première région (A1) est amené à s'écouler vers le premier réservoir de charge (10) à travers le tube (61) de la première rangée, une troisième région (A3) qui est adjacente à la deuxième région (A2) et dans laquelle le réfrigérant amené à s'écouler vers le premier réservoir de charge (10) à travers la deuxième région (A2) est amené à s'écouler vers le second réservoir de charge (20) à travers le tube (61) de la première rangée, et une quatrième région (A4) dans laquelle le réfrigérant amené à s'écouler à travers une partie de communication (70) du second réservoir de charge (20) est amené à s'écouler vers le premier réservoir de charge (10) à travers le tube (61) de la seconde rangée, une cinquième région (A5) qui est adjacente à la quatrième région (A4) et dans laquelle le réfrigérant amené à s'écouler vers le premier réservoir de charge (10) à travers la quatrième région (A4) est amené à s'écouler vers le second réservoir de charge (20) à travers le tube (61) de la seconde rangée, et une sixième région (A6) qui est adjacente à la cinquième région (A5) et dans laquelle le réfrigérant amené à s'écouler vers le second réservoir de charge (20) à travers la cinquième région (A5) est amené à s'écouler vers le premier réservoir de charge (10) à travers le tube (61) de la seconde rangée, et le réfrigérant est évacué à travers le tuyau de sortie (40).
